# EUROPÄISCHE PATENTSCHRIFT

(11) **EP 0 877 722 B1**
(45) Veröffentlichungstag und Bekanntmachung des Hinweises auf die Patenterteilung: **04.08.1999**
(21) Anmeldenummer: 97902249.8
(22) Anmeldetag: 29.01.1997
(51) Int. Cl.: C05G 3/00

(54) **GRANULATMISCHUNGEN BESTEHEND AUS UMHÜLLTEN UND NICHT-UMHÜLLTEN DÜNGEMITTELGRANULATEN**
GRANULATE MIXTURES CONSISTING OF COATED AND NON-COATED FERTILISER GRANULATES
MELANGES DE GRANULES COMPOSES DE SUBSTANCES FERTILISANTES SOUS FORME DE GRANULES, ENROBES OU NON

(30) Priorität: 02.02.1996 DE 19603739
(43) Veröffentlichungstag der Anmeldung: 18.11.1998
(73) Patentinhaber: BASF AKTIENGESELLSCHAFT, 67056 Ludwigshafen (DE)
(72) Erfinder: ERHARDT, Klaus, D-69181 Leimen (DE); HORCHLER VON LOCQUENGHIEN, Klaus, D-67117 Limburgerhof (DE); HÄHNDEL, Reinhardt, D-67117 Limburgerhof (DE); DRESSEL, Jürgen, D-67141 Neuhofen (DE); LANG, Hans, D-67117 Limburgerhof (DE)
(86) Internationale Anmeldenummer: EP9700378
(87) Internationale Veröffentlichungsnummer: WO9728103

(56) Entgegenhaltungen:
- EP-A- 0 184 869
- EP-A- 0 337 298
- EP-A- 0 661 250
- DE-A- 4 015 345
- US-A- 4 142 885

## Beschreibung

Die vorliegende Erfindung betrifft Granulatmischungen aus
a) 5 bis 45 Gew.-% umhüllten Düngemittelgranulaten (Granulate a), aus
   a1) einem Kern enthaltend ein übliches Düngemittel und
   a2) einer Hülle enthaltend ein Hüllpolymer und
b) 55 bis 95 Gew.-% nicht-umhüllten Düngemittelgranulaten enthaltend ein übliches Düngemittel (Granulate b)
sowie Düngeverfahren, bei denen die Granulatmischungen Verwendung finden.

Düngemittelgranulate, die nicht umhüllt sind, sind allgemein bekannt und beispielsweise in Ullmann's Encyclopedia of Industrial Chemistry, 5. Auflage 1987, Band A10, Seiten 363 bis 369 beschrieben. Diese Düngemittelgranulate weisen den Nachteil auf, daß die Düngemittelwirkstoffe, bei denen es sich üblicherweise um Salze handelt, aus diesen Granulaten rasch freigesetzt werden, was dazu führt, daß der Boden für eine kurzen Zeitraum hinweg eine hohe Nährstoff-Konzentration aufweist. Häufig können derartig hohe Mengen von den Pflanzen nicht sofort aufgenommen werden. In diesem Fall besteht die Gefahr, daß die Nährstoffe im Boden fixiert werden und dann den Pflanzen nicht mehr zur Verfügung stehen oder ausgewaschen werden und in das Grundwasser gelangen, was aus Gründen des Wasserschutzes zu vermeiden ist. Weiterhin können die temporär auftretenden hohen Salzkonzentrationen auch den Pflanzen Schaden zufügen und z.B. Kümmerwuchs verursachen.

Ferner fällt bei dieser Art der Düngung, selbst wenn man große Mengen an Düngemittel aufbringt, die Konzentration an Düngemittelmittelwirkstoff, die in einer für Pflanzen verwertbaren Form vorliegt so rasch ab, daß sie bereits kurze Zeit nach der Düngung zu gering, d.h. für das Pflanzenwachstum suboptimal ist und die Düngung in einer Vergleichsperiode mehrfach vorgenommen werden muß. Neben dem erhöhten Arbeitsaufwand besteht hierbei das Problem, daß Dungerkörner auf den Blattachseln haften bleiben und zu Verätzungen führen.

Um diesen Nachteilen abzuhelfen, wurden sog. Langzeitdünger entwickelt, die den Düngemittelwirkkstoff in einer für Pflanzen verträglichen Form über einen längeren Zeitraum hinweg, beispielsweise über eine gesamte Vegetationsperiode, in einer Menge abgeben, die an den zeitlichen Nährstoffbedarfsverlauf der Pflanze besser angepaßt ist.

Bei diesen Langzeitdüngern handelt es sich beispielsweise um Düngemittelgranulate, die mit einer Polymerhülle umhüllt sind. Derartige Düngemittel sind beispielsweise aus Ullmann's Encyclopedia of Industrial Chemistry, 5. Auflage 1987, Band A10, Seiten 367 bis 369 bekannt.

Weil man bisher annahm, daß eine befriedigende Anpassung des Freisetzungsverlaufs der Düngemittelwirkstoffe an den Bedarfsverlauf der Pflanzen nur dann gegeben ist, wenn der Hauptanteil der Granulatteilchen umhüllt ist, wurde in der deutschen Düngemittelverodnung in ihrer Fassung vom 9. Juli 1991 in § 2 in Verbindung mit Tabelle 3 (vgl. Das Düngemittelrecht, Ausgabe 1992 von Günter Kluge und Georg Embert, Landwirtschaftsverlag GmbH, Münster-Hiltrup, 1992, Seiten 21 und 62) und der Verordnung zur Änderung düngemittelrechtlicher Vorschriften vom 22. August 1995 (Bundesgesetzesblatt, Jahrgang 1995, Teil I, Seiten 1060 bis 1071) vorgeschrieben, daß nur solche umhüllten NPK-Düngemittel als sog. "EWG-Düngemittel" gekennzeichnet werden dürfen (und damit keiner gesonderten Zulassung bedürfen), bei denen der Anteil der mit einem Kunststoff umhüllten Granulate mindestens 50 % beträgt.

Nachteilig an den Granulatmischungen mit einem hohen Anteil an umhüllten Granulaten ist ihr hoher Preis, der seinen Grund in der verhältnismäßig aufwendigen Herstellung der umhüllten Granulate hat (bei der Herstellung der umhüllten Granulate geht man im allgemeinen von nicht-umhüllten üblichen Düngemittelgranulaten aus und beschichtet diese mit einer Lösung oder einer Dispersion des Hüllpolymers).

Die Aufgabe bestand deshalb darin, controlled-release-Düngemittel zu entwickeln, die preisgünstiger sind als die bekannten und einen im Hinblick auf den zeitlichen Nährstoffbedarf der Pflanzen angepaßten Freisetzungsverlauf aufweisen.

Demgemäß wurden die eingangs definierten Granulatmischungen gefunden.

Die erfindungsgemäßen Granulatmischungen enthalten
a) 5 bis 45 , bevorzugt 15 bis 40 Gew.-% mit einem Polymer umhüllten Düngemittelgranulaten (Granulate a), aus
   a1) einem Kern enthaltend einen üblichen Düngemittelwirkstoff und
   a2) einer Hülle enthaltend ein Hüllpolymer und
b) 55 bis 95, bevorzugt 60 bis 85 Gew.-% nicht-umhüllten Düngemittelgranulaten enthaltend einen üblichen Düngemittelwirkstoff (Granulate b)

Die Granulate (a) sind allgemein bekannt und beispielsweise in Ullmann's Encyclopedia of Industrial Chemistry, 5. Auflage 1987, Band A10, Seiten 367 bis 368 beschrieben.

Übliche Düngemittel, aus denen der Kern (a1) im allgemeinen im wesentlichen aufgebaut ist, sind beispielsweise Einzel- als auch Mehrnährstoffdünger, die einzeln oder gegebenenfalls in Kombination Nährstoffe wie Stickstoff, Kali oder Phosphor in Form ihrer Salze enthalten. Beispiele hierfür sind NP-, NK-, PK- sowie NPK-Dünger wie Kalkammonsalpeter, Ammonsulfat, Ammonsulfatsalpeter sowie Harnstoff.

Ferner kann der Kern (a1) neben den genannten Hauptbestandteilen noch Sekundärnährstoffe wie Ca, B und/oder Mg und Spurenelemente wie Fe, Mn, Cu, Zn und/oder Mo in untergeordneten Mengen, d.h. üblicherweise in Mengen von 0,5 bis 5 Gew.-% sowie weitere Zusatzstoffe wie Pflanzenschutzmittel, z.B. Insektizide oder Fungizide, Wachstumsregulatoren oder Nitrifikationsinhibitoren enthalten.

Die Hülle (a2) besteht im allgemeinen im wesentlichen aus gebräuchlichen Hüllpolymeren wie Polyethylen, Polypropylen, PVC, Polyvinylidenchlorid, Vinylchlorid-Vinylidenchlorid-Copolymere, Polyurethan (aliphatische und/oder aromatische), Polyvinylacetat, Polyacrylat, Polyvinylalkohol, Polyvinylpyrrolidon, Polyacrylamid, Polyacrylsäure, Harnstoff- und Melamin-Formaldehyd-Harze, Polyethylenoxid und -imin, Maleinsäureanhydrid-Styrol-Copolymere, Ethylen-Vinylacetat-CO-Copolymere, Terpolymere auf Basis Ethylen-Vinylchlorid und z.B. Acrylsäure, mit Cyclopentadien oder Butadien vernetzte Leinöl- und Sojaöl-Copolymerisate, Ethylen-Acrylsäure-Copolymere, Polymilchsäure, Polycaprolacton, Polyester, Polyhydroxybuttersäure, Hydroxypropylcellulose, Polyglycolsäure, Polyhydroxyvaleriansäure, Polyasparaginsäure sowie Paraffinwachse, Phthalsäureester von Fettalkoholen, Kollophonium und Metallsalze von Fettsäuren.

Vor allem sind als Hüllpolymere Carboxylgruppen-tragende Ethylencopolymerisate geeignet, bei denen die Carboxylgruppen auch in Form ihrer Salze vorliegen können, wobei das Carboxylgruppen-tragende Ethylencopolymerisat aufgebaut ist aus
a2.1) 75 bis 90 Gew.-%, bevorzugt 15 bis 25 Gew.-% Ethylen und
a2.2) 10 bis 25 Gew.-%, bevorzugt 15 bis 25 Gew.-% einer α-olefinisch ungesättigten C₃- bis C₈-Carbonsäure.

Geeignete Monomere (a2.2) sind insbesondere Acrylsäure, Methacrylsäure, Crotonsäure, Maleinsäure, Fumarsäure oder Itaconsäure sowie Gemische dieser Säuren.

Bevorzugt weisen die Carboxylgruppen-tragenden Ethylencopolymerisate einen Schmelzindex (MFI) von 1 bis 25, besonders bevorzugt 5, von 8 bis 15 (gemessen bei 160°C und 325 Kp) auf. Der MFI gibt die Menge der Polymerisatschmelze in Gramm an, die bei einer bestimmten Temperatur und Zeit durch eine Düse von bestimmten Abmessungen bei einem bestimmten Kraftaufwand (Belastung) gedruckt werden kann. Die Bestimmung der Schmelzindices (MFI-Einheiten) erfolgt analog den Normvorschriften, ASTM D 1238-65 T, ISO R 1133-1696 (E) oder DIN 53 735 (1970), die untereinander identisch sind.

Bevorzugt weisen die Carboxylgruppen-tragenden Ethylencopolymerisate einen Schmelzbereich auf, dessen Schmelzende (T_{SE}) oberhalb von 80°C, bevorzugt oberhalb von 110°C liegt. Das T_{SE} liegt im allgemeinen nicht höher als 200°C. Das T_{SE} läßt sich beispielsweise nach der Methode der Differential Scanning Calorimetry (DSC) ermitteln, wobei üblicherweise nach der Vorschrift der DIN53765 gearbeitet wird.

Die Carboxygruppen-tragenden Ethylencopolymerisate weisen ferner bevorzugt eine Glastemperatur (T_{G}) von unterhalb 50°C, bevorzugt von -20 bis +20°C auf und keine Glastemperatur oberhalb von 50°C. Die T_{G} wird üblicherweise ebenfalls nach der DSC-Methode nach der DIN53765 ermittelt.

Die Carboxylgruppen der Carboxylgruppen-tragenden Ethylencopolymerisate liegen bevorzugt ganz oder teilweise in Form ihrer Salze, bevorzugt in Form der Zink-, Alkali-, Erdalkali- oder Ammoniumsalze vor, wobei die Natrium- oder Ammoniumsalze besonders bevorzugt sind.

Als Ammoniumsalze kommen insbesondere solche in Betracht, die sich von Ammoniak, einen Mono-, Di- oder Trialkanolamin mit jeweils 2 bis 18 C-Atomen im Hydroxyalkylrest, bevorzugt 2 bis 6 C-Atomen, oder Mischungen der genannten Alkanolamine oder einem Dialkyl-monoalkanolamin mit jeweils 2 bis 8 C-Atomen im Alkyl- und Hydroxyalkylrest oder ihren Mischungen ableiten. Beispiele hierfür sind Diethanolamin, Triethanolamin, 2-Amino-2-methylpropanol-(1) oder Dimethylethanolamin.

Besonders günstig liegen 40 bis 100, besonders bevorzugt 70 bis 90 % der Carboxylgruppen in Form ihrer Salze vor.

Die Hüllen (a2) können weiterhin Salze enthalten, die in Düngemitteln im allgemeinen als Spurenelemente zugesetzt werden, also beispielsweise Salze von Mg, Fe, Mn, Cu, Zu, Mo und/oder B. Die Hüllen enthalten diese Salze gegebenenfalls in Mengen von 0,1 bis 5 Gew.-%, bezogen auf das Hüllpolymer.

Ferner enthalten die Hüllen (a2) gegebenenfalls weitere Zusatzstoffe wie Pflanzenschutzmittel, z.B. Insektizide oder Fungizide, Wachstumsregulatoren oder Nitrifikationsinhibitoren, üblicherweise in einer Gesamtmenge von 0,1 bis 5 Gew.-%, bezogen auf das Hüllpolymer.

Daneben können den Hüllen (a2) zusätzlich Substanzen, die der Steuerung der Freisetzung der Düngemittel dienen, zugesetzt werden. Dies sind vor allem Lignin, Stärke und Cellulosen oder Silikate. Deren Menge beträgt beispielsweise 0,1 bis 20 Gew.-%, vorzugsweise 0,1 bis 5 Gew.-%, bezogen auf das Hüllpolymer.

Üblicherweise enthalten die Granulate (a) zu
50 bis 99,5 Gew.-% einen Düngemittelwirkstoff und
0,5 bis 50 Gew.-% ein Hüllpolymer.

Die Granulate (a) können nach allgemein bekannten Verfahren erhalten werden. Zweckmäßigerweise geht man dabei so vor, daß man die Hüllpolymere in Form von Schelzen, Lösungen oder Dispersionen auf ein Düngemittel-Ausgangsgranulat aufbringt.

Geeignete Düngemittel-Ausgangsgranulate, die sich für die Herstellung der Granulate (a) eignen, sind allgemein bekannte Granulate von organischen oder mineralischen Düngemitteln (vgl. Ullmann's Encyclopädie of Industrial Chemistry, 5.Auflage 1987, Band A 10, Seiten 374 bis 385), die aus den Stoffen bestehen, aus denen sich der Kern (al) zusammensetzt.

Das Aufbringen der Lösungen bzw. Dispersionen der Carboxylgruppen-tragenden Ethylencopolymerisate erfolgt besonders günstig durch Aufsprühen bei einer Temperatur von im allgemeinen 10°C bis 110°C.

Um zu vermeiden, daß das Düngemittelausgangsgranulat bei Verwendung einer wässerigen Dispersion bzw. Lösung bei dessen Aufbringen angelöst wird, bringt man pro Zeiteinheit nur eine begrenzte Menge der Lösung bzw. Dispersion auf, und sorgt dafür, daß das Wasser rasch verdunsten kann.

Zweckmäßigerweise geht man dabei so vor, daß man eine Wirbelschicht, die man durch Aufwirbeln der Düngemittel-Ausgangsgranulats mit einem Wirbelgas erzeugt, bei einer Temperatur von 10 bis 110 °C, bevorzugt 30 bis 70°C, mit den Lösungen bzw. Dispersionen besprüht. Nach dem Aufsprühen der Lösungen bzw. Dispersionen wird die Wirbelschicht im allgemeinen so lange aufrecht erhalten, bis das Lösungsmittel bzw. das Dispergiermedium verdunstet ist.

Derartige Wirbelschicht-Auftragsverfahren sind allgemein bekannt und für die Herstellung von umhüllten Düngemittelgranulaten in der US-A-5 211 985 beschrieben. Mit diesen Verfahren lassen sich besonders gleichmäßige und dünne Hüllen erzeugen.

Mit Vorteil setzt man die Hüllpolymere dabei in Form von wässerigen Dispersionen ein.

Granulate (a), die den erfindungsgemäßen Granulatmischungen ein besonders günstiges Eigenschaftsprofil verleihen, insbesondere was die Unenpfindlichkeit gegen mechanische Beanspruchung und die Neigung zum Verkleben bei längerer Lagerung anbelangt, erhält man, wenn man die Düngemittel-Ausgangsgranulate nach dem Wirbelschicht-Auftragsverfahren mit einer wässerigen Dispersion eines Carboxylgruppen-tragenden Ethylencopolymerisates beschichtet. Geeignete wässerige Dispersionen sind beispielsweise die in der DE-A-34 20 168 beschriebenen wässerigen Dispersionen von Ethylencopolymerisat-Wachsen.

Die Dicke der Hülle (a2), die die Diffusionsgeschwindigkeit, mit der der Düngemittelwirkstoffs aus dem Granulat (a) diffundiert, mitbeeinflußt, beträgt üblicherweise 10 bis 200, bevorzugt 10 bis 100 µm.

Falls die Hüllen (a2) Zusatzstoffe, Spurenelemente oder Substanzen, die der Steuerung der Freisetzung der Düngemittel dienen, enthalten, werden diese zweckmäßigerweise den Lösungen, Dispersionen bzw. Schmelzen zugesetzt.

Um die Neigung der umhüllten Düngemittelgranulate zum Verkleben und Verbacken zu verringern, bringt man gegebenenfalls im Anschluß an die Umhüllung der Granulate mit den Carboxylgruppentragenden Ethylencopolymerisaten vorteilhafterweise pulverförmige Feststoffe wie Talkum, SiO₂, Al₂O₃ oder TiO₂ auf.

Bei den Granulaten (b), den nicht-umhüllten Düngemittelgranulaten, handelt es sich prinzipiell um die gleiche Art von Granulaten, die üblicherweise als Düngemittel-Ausgangsgranulate bei der Herstellung der Granulate (a) eingesetzt werden, wobei die stoffliche Zusammensetzung der Düngemittel-Ausgangsgranulate bzw. der Granulate (b) gleich oder verschieden sein kann.

Die Herstellung der erfindungsgemäßen Granulatmischungen durch Mischung der Granulate (a) und (b) ist unkritisch und wird im allgemeinen vorgenommen, indem man sie in einem üblichen Mischorgan wie einer Trommel oder statischen Mischer mischt.

Sowohl die Granulate (a) als auch die Granulate (b) weisen im allgemeinen einen längsten mittleren Durchmesser von 0,5 bis 10, bevorzugt 0,7 bis 5 mm auf. Ihr Schüttgewicht liegt üblicherweise bei 0,5 bis 1,3 kg/l.

Die jeweiligen Schüttgewichte bzw. Durchmesser der beiden Granulattypen werden mit Vorteil in etwa gleich groß gewählt, um einer Entmischung der erfindungsgemäßen Granulatmischung beim Transport oder Lagerung vorzubeugen.

Die erfindungsgemäßen Granulatmischungen werden üblicherweise nach den allgemein bekannten Verfahren auf landwirtschaftlich und gärtnerisch genutzte Flächen aufgebracht (vgl. Ullmann's Encyclopädie of Industrial Chemistry, 5.Auflage 1987, Band A 10, Seiten 398 bis 401). Wegen ihrer hohen Pflanzenverträglichkeit eigenen sich die erfindungsgemäßen Granulatmischungen nicht nur für Düngeverfahren, bei denen der Dünger annähernd gleichmäßig auf die Agrarfläche verteilt wird, sondern für die gezielte Ablage in der Nähe der Pflanzenwurzel.

Die erfindungsgemäßen Düngemittel können grundsätzlich in allen Bereichen des Pflanzenbaus wie der Landwirtschaft und dem Gartenbau eingesetzt werden, vor allem dem Obst- und Gemüsebau.

Kulturen, deren Wachstum mit- dem erfindungsgemäßen Düngemittel darüber hinaus effizient gefordert werden kann, sind Kartoffeln, Mais, Zuckerrüben, Raps, Wein, Rasen, Tabak und Hopfen.

Die erfindungsgemäßen Düngemittel zeichnen sich dadurch aus, daß sie eine besonders wirtschaftliche intensive Nutzung von landwirtschaftlich und gärtnerisch genutzten Flächen ermöglichen, wobei eine Belastung der Umwelt weitgehend vermieden wird.

Die erfindungsgemäßen Granulatmischungen werden nach üblichen Methoden auf die landwirtschaftlich oder gärtnerisch genutzten Flächen aufgebracht oder in Topf- oder Containerkulturen eingemischt.

Für einen optimale Wachstumsförderung der Pflanzen reicht es im allgemeinen aus, die erfindungsgemäßen Düngemittel einmal pro Wachstumsperiode (bevorzugt zu deren Beginn) auf die Agrarfläche aufzubringen, weil der Nährstoffbedarfsverlauf der Pflanzen und der Freisetzungsverlauf der Düngemittelwirkstoffe übereinstimmen.

Bei Verwendung der erfindungsgemäßen Granulatmischungen als Düngemittel ist das Kosten-Nutzen-Verhältnis besonders günstig, weil ihr Eigenschaftsprofil dem der Granulatmischungen, bei denen mindestens 50 % der Granulate mit Kunststoff umhüllt sind, zumindest nicht unterlegen ist, ihre Herstellungskosten jedoch geringer sind. Die Herstellkosten der vorbekannten Granulatmischungen sind zwangsläufig höher, weil der Anteil der höherveredelten, umhüllten Granulate höher ist, und man bei deren Herstellung von nicht-umhüllten Granulaten ausgeht, die den restlichen Anteil an der Granulatmischung ausmachen.

### Beispiele

### A. Herstellung der Granulatmischungen

### I. Diskontinuierliche Herstellung

In einem Doppelkonusmischer aus Metall mit einem Behältervolumen von ca. 400 l und einer maximalen Füllmenge von 250 kg werden abwechseln portionsweise in Portionen von ca. 10 kg umhülltes Düngemittel (übliches NPK-Düngemittelgranulat (Zusammensetzung: Stickstoff (15 Teile, bewertet als N), Phosphor (5 Teile, bewertet als P₂O₅), Kali (20 Teile, bewertet als K₂O) und Magnesium (2 Teile, bewertet als MgO)), umhüllt mit einem Ethylen-Acrylsäure-Copolymer, 5 % Hüllpolymer bezogen auf das Düngemittel) und Portionen von ca. 30 kg nicht umhülltes Düngemittel (übliches NPK-Düngemittel) eingefüllt, bis die maximale Füllmenge erreicht war. Am Ende enthielt der Mischer 62,5 kg umhülltes und 187,5 kg nicht umhülltes Düngemittel. Dann wurde der Mischer 1 min betätigt und anschließend entleert. Es wurde ein weitgehend homogen gemischter bulk blend mit einem Anteil von 25 % umhüllten Granulaten erhalten.

### II. Kontinuierliche Herstellung

In eine geneigte Drehtrommel (Länge ca. 3 m, Durchmesser ca. 1 m) mit eingebauten Hubschaufeln wurde über 2 separate Schüttelrinnen die unter (I) beschriebenen umhüllten und nicht umhüllten Düngemittel jeweils in den in Tabelle 1 angegebenen Verhältnissen gefüllt. Die Neigung der Trommel, ihre Drehfrequenz und die Geometrie der Einbauten ist derart aufeinander abgestimmt, daß die Verweilzeit des Düngers in der Trommel im Mittel etwa 10 bis 15 min beträgt. Am Auslauf verläßt die Trommel ein praktisch homogener bulk blend.

### B. Pflanzenbauliche Prüfungen

Die Versuche wurden auf einem lehmigen Sandboden auf der Landwirtschaftlichen Versuchsstation in Limburgerhof durchgeführt. Die Ausbringung der Düngung erfolgte in einer Gabe als Reihendüngung 6 cm tief, 6 cm neben der Reihe. Dieses Düngungsverfahren, welches in der Praxis mittlerweile Eingang gefunden hat, verzichtet auf eine ganzflächige Ausbringung des Düngers, da dabei die Nährstoffe zwischen den weitstehenden Gemüsearten nicht oder erst später von den Wurzeln erreicht werden. Von den Pflanzenwurzeln nicht erreichbare Nährstoffe können ausgewaschen oder im Boden festgelegt werden. Eine pflanzennahe Applikation fördert somit die Effizienz der ausgebrachten Nährstoffe.

Die Düngung in den Versuchen erfolgte jeweils mit dem gemäß den Beispielen hergestellten Düngemittelgranulat-Mischungen. Die Düngungshöhe lag bei 240 kg/ha N (= ca. 1600 kg/ha Dünger), was dem Nährstoffbedarf aus Düngern bei diesen Kulturen entspricht.

Tabelle 1 zeigt für beide geprüften Kulturen (Blumenkohl und Chinakohl), daß mit einem Anteil von 25 % umhüllter Granalien gleich hohe oder höhere Erträge erzielt werden konnten. Bei den Varianten ohne umhüllte Granalien war die Salzbelastung der Pflanzen durch die applizierten Dünger hoch, so daß sie nicht optimal wachsen konnten. Bei Einsatz von Düngern mit einem Anteil von 75 % oder 100 % umhüllter Granalien war die die Verträglichkeit hingegen gegeben, die Nährstoffanlieferung für diese schnell wachsenden Kulturen mit hohem Nährstoffbedarf war zeitweise jedoch nicht ausreichend, so daß der Ertrag zur Ernte entsprechend niedriger ausfiel.

**Tabelle 1**

| Anteil umhüllter Granalien | Blumenkohl | | Chinakohl |
|---|---|---|---|
| | ¹⁾ Ertrag [t/ha] | ²⁾ Stück mit bester Größe pro m² | ³⁾ Ertrag [t/ha] |
| 0 | 41,1 | 2,17 | 43,2 |
| 25 | 47,4 | 2,26 | 45,1 |
| 50 | 44,9 | 2,17 | 44,7 |
| 75 | 43,3 | 1,97 | 40,4 |
| 100 | 34,7 | 0,60 | |

| | | | |
|---|---|---|---|
| ¹⁾ Berücksichtigt wurden nur die Ernte mit den im Handel allgemein üblichen Handelsgrößen, "6er", "8er", "12er". | | | |
| ²⁾ Bei der besten Größe handelt es sich um die vom Handel bevorzugte Größe der Kohlköpfe "6er"; die Zahl gibt die Anzahl von Kohlköpfen mit der besten Größe an, die pro m² Anbaufläche geerntet werden konnte. | | | |
| ³⁾ Berücksichtigt wurde nur die Ernte der Klasse 1 und 2. | | | |

## Patentansprüche

1. Granulatmischungen aus
a) 5 bis 45 Gew.-% umhüllten Düngemittelgranulaten (Granulate a), aus
a1) einem Kern, enthaltend ein übliches Düngemittel und
a2) einer Hülle, enthaltend ein Hüllpolymer
und
b) 55 bis 95 Gew.-% nicht-umhüllten Düngemittelgranulaten, enthaltend ein übliches Düngemittel (Granulate b).

2. Granulatmischungen nach Anspruch 1, wobei die Granulate (a) oder (b) einen längsten mittleren Durchmesser von 0,5 bis 5 mm aufweisen.

3. Granulatmischungen nach Anspruch 1, wobei die Granulate (a) zu
80 bis 99,5 Gew.-% ein Düngemittel und
20 bis 0,5 Gew.-% ein Hüllpolymer
enthalten.

4. Granulatmischungen nach den Ansprüchen 1 bis 3, wobei es sich bei dem Düngemittel um Einzel- oder Mehrnährstoffdüngemittel handelt.

5. Granulatmischungen nach den Ansprüchen 1 bis 4, wobei es sich bei den Hüllpolymeren um Polymere, ausgewählt aus der Gruppe Polyethylen, Polyvinylidenchlorid, Polyurethane (aliphatische und/oder aromatische), mit Cyclopentadien oder Butadien vernetzte Leinöl- und Sojaöl-Copolymerisate und Ethylen-Acrylsäure-Copolymere handelt.

6. Granulatmischungen nach den Ansprüchen 1 bis 5, wobei das Hüllpolymer ein Carboxylgruppen-tragendes Ethylencopolymerisat ist, bei dem die Carboxylgruppen auch in Form ihrer Salze vorliegen können, und das Carboxylgruppen-tragende Ethylencopolymerisat aufgebaut ist aus
b2.1) 75 bis 90 Gew.-% Ethylen und
b2.2) 10 bis 25 Gew.-% einer α-olefinisch ungesättigten C₃-bis C₈-Carbonsäure.

7. Granulatmischungen nach den Ansprüchen 1 bis 6, wobei die Hülle (a2) im Mittel eine Dicke von 1 bis 200 µm aufweist.

8. Düngeverfahren, dadurch gekennzeichnet, daß man die Granulatmischungen nach den Ansprüchen 1 bis 8 auf eine landwirtschaftlich oder gärtnerisch genutzte Fläche aufbringt oder in Topf- oder Containerkulturen einmischt.

9. Verwendung der Granulatmischungen nach den Ansprüchen 1 bis 8 zur Düngung von Obst- und Gemüsekulturen oder Rasenflächen.

## Claims

1. A granule mixture composed of
a) 5 to 45% by weight of coated fertilizer granules (granules a), composed of
a1) a core, comprising a customary fertilizer, and
a2) a coat, comprising a coat polymer,
and
b) 55 to 95% by weight of non-coated fertilizer granules, comprising a customary fertilizer (granules b).

2. A granule mixture as claimed in claim 1, granules (a) or (b) having a maximum average diameter of from 0.5 to 5 mm.

3. A granule mixture as claimed in claim 1, granules (a) comprising
80 to 99.5% by weight of a fertilizer and
20 to 0.5% by weight of a coat polymer.

4. A granule mixture as claimed in any of claims 1 to 3, the fertilizer being a single-constituent or compound fertilizer.

5. A granule mixture as claimed in any of claims 1 to 4, the coat polymers being polymers selected from the group consisting of polyethylene, polyvinylidene chloride, (aliphatic and/or aromatic) polyurethanes, linseed oil and soya oil block copolymers crosslinked with cyclopentadiene or butadiene, and ethylene/acrylic acid block copolymers.

6. A granule mixture as claimed in any of claims 1 to 5, the coat polymer being a carboxyl-carrying ethylene block copolymer where the carboxyl groups may also be present in the form of their salts and the carboxyl-carrying ethylene block copolymer being constructed of
b2.1) 75 to 90% by weight of ethylene and
b2.2) 10 to 25% by weight of an α-olefinically unsaturated C₃- to C₈-carboxylic acid.

7. A granule mixture as claimed in any of claims 1 to 6, the coat (a2) having an average thickness of 1 to 200 µm.

8. A fertilizing method which comprises applying the granule mixture as claimed in any of claims 1 to 8 to an agriculturally or horticulturally exploited area or mixing it into pots or containers for crops.

9. The use of a granule mixture as claimed in any of claims 1 to 8 for fertilizing fruit and vegetable crops or lawns.

## Revendications

1. Mélanges à l'état de granulés, consistant en
a) 5 à 45 % en poids de granulés enrobés d'engrais (granulés a), consistant eux-mêmes en
a1) un noyau contenant un engrais usuel et
a2) une enveloppe contenant un polymère d'enrobage
et
b) 55 à 95 % en poids de granulés d'engrais non enrobés, contenant un engrais usuel (granulés b).

2. Mélanges à l'état de granulés selon la revendication 1, dans lesquels les granulés a) ou b) ont un diamètre moyen maximum de 0,5 à 5 mm.

3. Mélanges à l'état de granulés selon la revendication 1, dans lesquels les granulés a) contiennent
80 à 99,5 % en poids d'un engrais et
20 à 0,5 % en poids d'un polymère d'enrobage.

4. Mélanges à l'état de granulés selon les revendications 1 à 3, dans lesquels les engrais sont des engrais à une ou plusieurs substances nutritives.

5. Mélanges à l'état de granulés selon les revendications 1 à 4 dans lesquels les polymères d'enrobage sont choisis dans le groupe formé par le polyéthylène, le chlorure de polyvinylidène, les polyuréthannes (aliphatiques et/ou aromatiques), les copolymères de l'huile de lin et de l'huile de soja réticulés par le cyclopentadiène ou le butadiène et les copolymères éthylène-acide acrylique.

6. Mélanges à l'état de granulés selon les revendications 1 à 5, dans lesquels le polymère d'enrobage est un copolymère de l'éthylène portant des groupes carboxyle et dans lequel les groupes carboxyle peuvent également être à l'état de sels, et le copolymère de l'éthylène portant les groupes carboxyle est constitué de
b2.1) 75 à 90 % en poids d'éthylène et
b2.2) 10 à 25 % en poids d'un acide carboxylique à insaturation alpha-oléfinique en C3-C8.

7. Mélanges à l'état de granulés selon les revendications 1 à 6, dans lesquels l'enveloppe (a2) a une épaisseur moyenne de 1 à 200 µm.

8. Procédé de fertilisation caractérisé par le fait que l'on applique les mélanges de granulés selon les revendications 1 à 8 sur une aire d'exploitation agricole ou horticole ou on les mélanges à des cultures en pots ou en conteneurs.

9. Utilisation des mélanges de granulés selon les revendications 1 à 8 pour la fertilisation de cultures fruitières et potagères ou de surfaces de gazon.
